# EUROPÄISCHE PATENTSCHRIFT

(11) **EP 0 598 334 B1**
(45) Veröffentlichungstag und Bekanntmachung des Hinweises auf die Patenterteilung: **02.11.1995**
(21) Anmeldenummer: 93118267.9
(22) Anmeldetag: 11.11.1993
(51) Int. Cl.: B25B 21/00, B23P 19/06

(54) **Schraubgerät**
Screwing device
Dispositif de vissage

(30) Priorität: 14.11.1992 DE 4238537
(43) Veröffentlichungstag der Anmeldung: 25.05.1994
(73) Patentinhaber: KARL M. REICH MASCHINENFABRIK GmbH, 72622 Nürtingen (DE)
(72) Erfinder: Ramin, Wolfgang, D-72622 Nürtingen (DE)

(56) Entgegenhaltungen:
- EP-A- 0 284 755
- DE-A- 1 527 542
- DE-C- 3 333 427
- US-A- 4 782 726

## Beschreibung

Aus der DE-A-33 33 427 ist ein Schraubgerät der genannten Gattung bekannt, dessen Schraubklinge während der Einschraubbewegung durch ein zusätzliches, mit dem Antriebsmotor verbundenes Getriebe über eine Schraubspindel eine zwangsweise, gesteuerte Vorschubbewegung erteilt wird.

Wenn bei diesem bekannten Schraubgerät die Gewindesteigung der Schraubspindel von der Gewindesteigung der einzuschraubenden Schraube abweicht, wird diese nicht einwandfrei in das Werkstück eingeschraubt und kann dieses beschädigen.

Aufgabe der vorliegenden Erfindung ist daher die Schaffung eines Schraubgeräts der eingangs genannten Art, bei dem sich die Vorschubbewegung der Schraubklinge der Vorschubbewegung der Schraube selbsttätig anpasst.

Diese Aufgabe wird erfindungsgemäß durch das im kennzeichnenden Teil des Anspruchs 1 angegebene Merkmal gelöst.

Bei der vorliegenden Erfindung erfolgt somit der Vorschub der Schraubklinge nicht zwangsläufig, sondern passt sich dem Vorschub der einzuschraubenden Schraube an, so daß diese ohne Beschädigung des Werkstücks in dieses einwandfrei eingeschraubt wird.

Die erfindungsgemäße Schraubkupplung erlaubt eine kurze Baulänge des Schraubgeräts, so daß diese auch bei beengten Arbeitsverhältnassen eingesetzt werden kann. Da kein zusätzliches Getriebe notwendig ist, wird das ganze Schraubgerät billiger und weist ein geringeres Gewicht auf.

Im folgenden sind Ausführungsbeispiele der Erfindung unter Bezugnahme auf die Zeichnungen näher beschrieben.

Es zeigen:
- Fig. 1: Erstes Ausführungsbeispiel eines Schraubgeräts, im Längsschnitt
- Fig. 2: Zweites Ausführungsbeispiel eines Schraubgeräts, im Längsschnitt

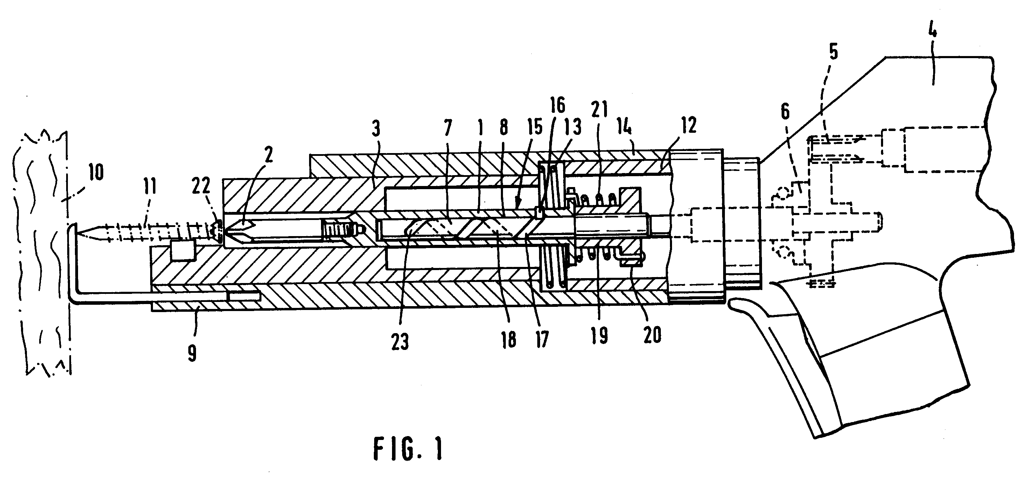

Bei dem in Fig. 1 dargestellten Ausführungsbeispiel der Erfindung ist eine Schraubklinge 1 mit der Einsatzspitze 2 in einem Führungsgehäuse 3 drehbar und achsial verschiebbar gelagert.

Zum Antrieb der Schraubklinge 1 dient ein Antriebsmotor 4, der über ein Getriebe 5 und eine Kupplung 6 mit einem Antriebsorgan 7 verbunden ist, das in eine Achsialbohrung 8 der Schraubklinge 1 eingreift.

Das Führungsgehäuse 3 ist mit einem Aufsetzfuß 9 verbunden, der auf dem Werkstück 10 aufsetzbar ist und der gleichzeitig zum Halten der einzuschraubenden Schraube 11 dient.

Der Antriebsmotor 4 ist mit einem Schaft 12 gegen Wirkung einer Feder 13 achsial verschiebbar in einer Hülse 14 von Führungsgehäuse 3 gelagert.

Zwischen Antriebsorgan 7 und Schraubklinge 1 ist eine Schraubkupplung 15 vorgesehen, bei der ein mit der Schraubklinge 1 verbundenes Mitnehmerorgan 16 in Form eines Zapfans in eine als Wendel ausgebildete Nut 17 im Schaft 18 des Antriebsorgans 7 eingreift.

Zur Einstellung der Schraubklinge 1 auf verschiedene Längen der Schrauben 11 ist auf dem Antriebsorgan 7 ein Einstellorgan 19 schraubbar gelagert. An seinem einen Ende ist eine drehbare Scheibe 20 vorgesehen, an der ein Rückholorgan 21 in Form einer Zugfeder befestigt ist. Diese ist mit ihrem anderen Ende mit der Schraubklinge 1 verbunden.

Zur Beschreibung der Funktion des Schraubgeräts ist dieses in Fig. 1 in Ruhestellung dargestellt. Es wird mit seinem Aufsetzfuß 9 gegen das Werkstück 10 gepresst, die einzuschraubende Schraube 11 wird vom Aufsetzfuß 9 festgehalten.

Wird nun Antriebsmotor 4 eingeschaltet, dann treibt dieser über das Getriebe 5 und die Kupplung 6 das Antriebsorgan 7 an, das zunächst über das Mitnehmerorgan 16 der Schraubkupplung 15 die Schraubklinge 1 in eine drehende Bewegung versetzt.

Wird jetzt der Antriebsmotor 4 und damit über das Antriebsorgan 7 die Schraubklinge 1 gegen Wirkung der Feder 13 in Richtung Schraube 11 verschoben, dann greift die Einsatzspitze 2 in den Kreuzschlitz 22 der Schraube 11 ein und versetzt diese ebenfalls in Drehung.

Schraube 11 beginnt jetzt in das Werkstück 10 einzudringen, wobei sie als Reaktion auf ihren Einschraubwiderstand eine die Drehung der Schraubklinge 1 hemmende Kraft ausübt.

Damit ergibt sich eine Relativbewegung zwischen Schraubklinge 1 und Antriebsorgan 7, so daß das Mitnehmerorgan 16 längs der Nut 17 gleitet und damit eine Vorschubbewegung der Schraubklinge 1 hervorruft. Diese Vorschubbewegung passt sich genau dem vom Gewinde der Schraube 11 erzeugten Vorschub der Schraube 11 an und dauert so lange, bis das Mitnehmerorgan 16 das Ende 23 der Nut 17 erreicht hat.

Das dabei entstehende hohe Drehmoment löst die Kupplung 6 aus, so daß die Verbindung zwischen Antriebsorgan 7 und Antriebsmotor 4 getrennt wird. Dabei ist Schraube 11 vollständig ins Werkstück 10 eingeschraubt und das Rückholorgan 21 zieht die Schraubklinge 1 wieder in ihre Ruhestellung, wo sie am Einstellorgan 19 anschlägt.

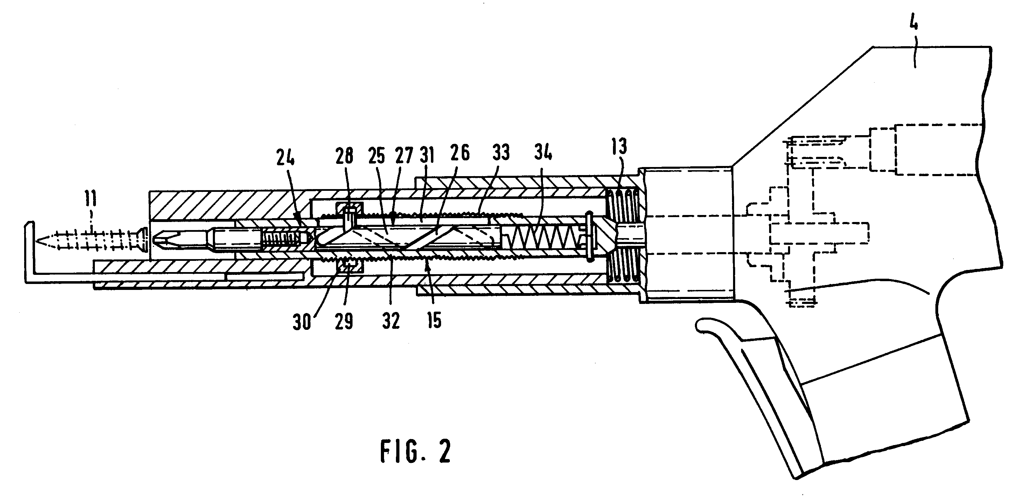

Bei der Ausführungsform der Erfindung gemäß Fig. 2 ist die Schraubklinge 24 mit einem Schaft 25 versehen, der eine als Wendel ausgebildete Nut 26 aufweist. Zur Bildung einer Schraubkupplung 27 greift in diese Nut 26 das Mitnehmerorgan 28 ein, das in einer Ringnut 29 eines Einstellorgans 30 verschiebbar gelagert ist.

Das Einstellorgan 30 ist in einem Schlitz 31 des Antriebsorgans 32 achsial verschiebbar gelagert, wobei der Schaft 25 der Schraubklinge 24 von einer Hülse 33 des Antriebsorgans 32 umfasst wird.

Zwischen Schraubklinge 24 und Antriebsorgan 32 ist wieder ein Rückholorgan 34 in Form einer Zugfeder vorgesehen.

Zur Anpassung der Schraubklinge 24 an verschiedene Längen der Schrauben 11 ist das Einstellorgan 30 als Rändelmutter ausgebildet, die auf dem Antriebsorgan 32 schraubbar gelagert ist.

Die übrigen Elemente des Ausführungsbeispiels gemäß Fig. 2 entsprechen dem Ausführungsbeispiel gemäß Fig. 1, außerdem ergibt sich die Funktion dieses Ausführungsbeispiels wie bereits oben beschrieben.

## Patentansprüche

1. Schraubgerät mit einem Führungsgehäuse, in dem eine motorisch antreibbare Schraubklinge (1;24) drehbar und achsial verschiebbar gelagert ist, mit einem vom Antriebsmotor (4) antreibbaren Antriebsorgan (7;32), das mit der Schraubklinge (1;24) über eine Schraubkupplung (15;27) verbunden ist, **dadurch gekennzeichnet,** daß die Schraubkupplung (15,27) ein Mitnehmerorgan (16,28) aufweist, das mit einer als Wendel ausgebildeten Nut (17,26) in einem Schaft (18,25) der Schraubkupplung (15,27) so zusammenwirkt, daß bei betätigtem Antriebsorgan (7,32) die Schraubklinge (1,24) eine Drehbewegung und als Reaktion des von der einzuschraubenden Schraube (11) herrührenden Einschraubwiderstands auf die Schraubkupplung (15,27) eine Vorschubbewegung ausführt.

2. Schraubgerät nach Anspruch 1, **dadurch gekennzeichnet,** daß zwischen Schraubklinge (1,24) und Antriebsorgan (7,32) ein Rückholorgan (21,34) vorgesehen ist.

3. Schraubgerät nach Anspruch 1 oder 2, **dadurch gekennzeichnet,** daß zur achsialen Verstellung der Schraubklinge (1,24) ein Einstellorgan (19,30) vorgesehen ist, das mit dem Antriebsorgan (7,32) achsial einstellbar verbunden ist.

4. Schraubgerät nach den Ansprüchen 1 bis 3, **dadurch gekennzeichnet,** daß das Antriebsorgan (7,32) gegen Wirkung einer Feder (13) achsial verschiebbar im Führungsgehäuse (3) gelagert ist.

## Claims

1. A screwdriving unit having a guide housing in which a motor-drivable screwdriver blade (1; 24) is mounted in rotatably and axially movable manner, and having a drive element (7; 32) drivable by the drive motor (4) and connected to said screwdriver blade (1; 24) via a screw coupling (15; 27), **characterized** in that said screw coupling (15; 27) has a catch element (16, 28) that interacts with a groove (17, 26) designed in helical form in a shank (18, 25) of said screw coupling (15, 27) such that when said drive element (7, 32) is operated said screwdriver blade (1, 24) performs both a rotary movement and, as a reaction to the screwing-in resistance exerted on said screw coupling (15, 27) by the screw (11) to be screwed in, a feed movement.

2. A screwdriving unit according to Claim 1, **characterized** in that a returning element (21, 24) is provided between said screwdriver blade and said drive element (7, 32).

3. A screwdriving unit according to Claim 1 or Claim 2, **characterized** in that a setting element (19, 30) is provided for axial adjustment of said screwdriver blade (1, 24) and is connected in axially adjustable manner to said drive element (7, 32).

4. A screwdriving unit according to one of Claims 1 to 3, **characterized** in that said drive element (7, 32) is mounted in axially movable manner inside said guide housing (3) against the action of a spring (13).

## Revendications

1. Visseuse avec un boîtier de guidage dans lequel est logée une lame à vis (1;24), entraînable par moteur, rotative et déplaçable axialement, avec un élément d'entraînement (7;32) entraînable par un moteur de commande (4), cet élément étant relié avec la lame à vis (1;24) à travers un manchon à vis (15;27), **caractérisée en ce que** le manchon à vis (15;27) présente un élément d'entraînement (16;28) concourant avec une rainure (17; 26) en forme d'hélice dans une tige (18;25) du manchon à vis (15;27) de telle manière que, l'élément de commande (7;32) étant actionné, la lame à vis (1;24) effectue un mouvement de rotation et, comme réaction à la résistance de vissage provenant de la vis (11) à visser, un mouvement d'avance vers le manchon à vis (15;27).

2. Visseuse selon la revendication 1, **caractérisée en ce que** un élément de rappel (21;34) est prévu entre la lame à vis (1;24) et l'élément d'entraînement (7;32).

3. Visseuse selon la revendication 1 ou 2, **caractérisée en ce que** un élément de réglage (19;30) est prévu pour le réglage axial de la lame à vis (1;24), cet élément étant réglable axialement avec l'élément d'entraînement (7;32) avec lequel il est relié.

4. Visseuse selon les revendications 1 à 3, **caractérisée en ce que** l'élément d'entraînement (7; 32) est logé de façon axialement déplaçable en antagonisme à l'effet d'un ressort (13) dans le boîtier de guidage (3).
